# EUROPEAN PATENT APPLICATION

(11) **EP 4 671 977 A1**
(43) Date of publication of application: **31.12.2025**
(21) Application number: 24194763.9
(22) Date of filing: 15.08.2024
(51) Int. Cl.: G06F 9/451, G06F 9/455, G06F 3/0484

(54) **A METHOD FOR OPERATING A DISTRIBUTED APPLICATION INCLUDING A SEPARATE DIGITAL ASSISTANT APPLICATION**

(71) Applicant: Deutsche Telekom AG, 53113 Bonn (DE)
(72) Inventor: ARUNOV, Elmar, 10587 Berlin (DE); CID CASTRO, Wenceslao, 64342 Seeheim-Jugenheim (DE); FREI, Patrick, 80333 München (DE)
(74) Representative: RDL Patentanwälte PartG mbB

(57) **Abstract**

A method for operating a distributed application, wherein a frontend of a distributed application and a backend of the distributed application are executed by a client device and a server device, respectively, and a digital assistant module integrated in the frontend and providing a three-dimensional, 3D, character having a human-like appearance to be displayed by the client device interacts with a frontend module of the frontend; a digital assistant application for a distributed application and a computer program product.

## Description

The invention relates to a method for operating a distributed application, wherein a frontend of a distributed application and a backend of the distributed application are executed by a client device and a server device, respectively, and a digital assistant module integrated in the frontend and providing a three-dimensional, 3D, character having a human-like appearance to be displayed by the client device interacts with a frontend module of the frontend. The invention further relates to a digital assistant application for a distributed application and a computer program product.

Methods of the above mentioned type form part of the state of the art and are used to facilitate a usage of a distributed application. The server device is usually arranged remote from the client device which may also referred to as a terminal device. The 3D character is an animated human-like digital assistant supporting the user in interacting with the distributed application. The user interacts with the 3D character by means of vocal utterances, i.e., using a spoken natural language. Herein, an interaction shall be generally understood bidirectional.

However, developing a distributed application having a full 3D graphical user interface, GUI, with a 3D character is a very expensive task as such a distributed application has to be developed from scratch without reusing perfectly functional components of a distributed application having a two-dimensional, 2D, GUI.

On the other hand, interacting with the distributed application exclusively via the 3D character may easily result in a negative user experience at least in some use cases. The latter particularly occurs as users are very familiar with usability paradigms related to distributed applications having a 2D GUI.

As a result, distributed applications having a full 3D GUI are very inefficient both from a developer's and from a user's point of view.

It is, therefore, an object of the invention to suggest a method for operating a distributed application which is based on a traditional distributed application having a two-dimensional, 2D, graphical user interface, GUI, and still provides a user of the distributed application with a 3D character to optionally interact with. Further objects of the invention are to provide a digital assistant application for a distributed application and a computer program product.

One aspect of the invention is a method for operating a distributed application, wherein a frontend of a distributed application and a backend of the distributed application are executed by a client device and a server device, respectively, and a digital assistant module integrated in the frontend and providing a three-dimensional, 3D, character having a human-like appearance to be displayed by the client device interacts with a frontend module of the frontend. The digital assistant module may access a microphone and a loudspeaker of the client device in order to detect vocal utterances, i.e., a spoken natural language uttered by a user of the distributed application and to generate vocal utterances to be heard by the user, respectively. The 3D character may be displayed by a screen of the client device. The 3D character shall be understood to possibly comprise a complete 3D scene with the character and a surrounding of the character.

According to the invention, a real-time session application of a session instance created by a digital assistant application separate from the distributed application and comprising the digital assistant module renders the 3D character, the session instance being executed by a virtual machine, VM, or a container remote from the client device and a streaming service of the digital assistant application streams the rendered 3D character to the digital assistant module. The digital assistant application comprises the digital assistant module integrated in the frontend and is executed simultaneously with the distributed application. The session instance remotely controls the 3D character displayed by the client device, i.e., causes the 3D character to move and to speak. Thus, the appearance and the utterances of the 3D character are independent of the client device. In other words, the 3D character behaves and sounds identical on each client device used by the user. Apart from that, the client device is relieved from rendering the 3D character, i.e., the animated 3D character does not substantially increase a computational load of the client device. The real-time session application may comprise a real-time rendering engine, e.g., an Unreal engine or a Unity engine.

The VM or the container may be provided by a dedicated server device or by a cloud service accessible for the client device. The server device providing the VM or the container may be different from the server executing the backend of the distributed application. The streaming service streams both video data and audio data to the digital assistant module executed by the client device.

Preferably, a coordinator module of the digital assistant application controls the interaction of the digital assistant module and the frontend module and/or gathers events created by the frontend module. The coordinator module operationally links the digital assistant module to the frontend module. Gathering events created by the frontend module allows the digital assistant application for reacting to a change of state of the frontend module.

In a favorable embodiment, interacting with the frontend module comprises manipulating and/or detecting a manipulation of an element of a graphical user interface, GUI, provided by the frontend module. The element may comprise a button, an entry field of a form, a product grid, a shopping cart and the like. The 3D character may be displayed separate from the GUI or seamlessly integrated in the GUI. The digital assistant module may operate the GUI and detect the GUI to be operated by the user.

The rendered 3D character is advantageously streamed using webRTC. The digital assistant application obtains real-time capabilities due to webRTC which is an open standard comprising a plurality of communication protocols and application programming interfaces, API, allowing computing devices for a real-time communication.

The 3D character may be interacted with using a spoken natural language and/or the frontend module may be interacted with using a mouse click or a finger tap. For operating the frontend module, the user may choose the most comfortable and adequate interaction. The flexibility of interaction results in a very positive user experience when using the distributed application.

Preferably, an event service of a session server of the session instance forwards events created by the session instance, the frontend and/or the real-time session application to the digital assistant module, the real-time session application and/or the backend, the digital assistant module, the real-time session application and the backend having subscribed to the event service, respectively. The event service is the central messaging hub of the digital assistant application receiving events from the components of the digital assistant application and transmitting received events to the components. Particularly, the event service implements a publish-subscribe function of the digital assistant application. Due to the event service the digital assistant application may be a real-time application, particularly when webRTC is used for streaming the rendered 3D character.

The session server advantageously also authenticates and authorizes the user of the client device and the backend. The session server may support multiple client devices sharing the session instance and/or multiple distributed applications.

The session instance may execute the streaming service, the streaming service being part of the session server. The streaming service may alternatively be separate from the digital assistant application.

The real-time session application preferably interacts with a conversational artificial intelligence, AI, service separate from the distributed application. The conversational AI may comprise a large language model, LLM, a dialogue manager, a text-to-speech converter, a natural language interpreter and the like and particularly be configured for taking into account a context of the distributed application and a current state of the user interaction.

A web application, a native mobile application or an extended reality, XR, application may be executed as the distributed application. The listed items are exemplary only. The invention is not restricted to the listed types of distributed applications.

Another aspect of the invention is a digital assistant application for a distributed application. The distributed application is configured for adding a 3D character to the distributed application.

According to the invention, the digital assistant application comprises a digital assistant module to be integrated in a frontend of a distributed application, the digital assistant module configured for interacting with a frontend module of the frontend and providing the frontend with a three-dimensional, 3D, character having a human-like appearance to be displayed by a client device executing the frontend, and a streaming service configured for streaming the 3D character to the digital assistant module. The digital assistant module is configured for receiving the streamed 3D character and causing the client device to display the received 3D character. Receiving the streamed 3D character may comprise receiving both a video stream and an audio stream of the 3D character. Displaying the received 3D character may comprise both a visual and a phonetic presentation of the received 3D character.

The digital assistant application is further configured for creating a session instance to be executed by a virtual machine, VM, or a container remote from the client device and the real-time session application of the created session instance is configured for rendering the 3D character and transmitting the rendered 3D character to the streaming service. The real-time session application relieves the digital assistant module from rendering the 3D character and causes the 3D character to behave identically on each client device used by a user of the distributed application.

Preferably, the digital assistant application comprises a coordinator module configured for operationally linking the digital assistant module to the frontend module and/or the real-time session application is configured for interacting with a backend of the distributed application and/or is configured to interact with a conversational artificial intelligence, Al, service separate from the distributed application. The coordinator module allows for a bidirectional interaction of the digital assistant module and the frontend module. The conversational Al provides the 3D character with a context-aware capability to interact with the user of the distributed application using a spoken natural language.

The distributed application may be a web application, a native mobile application or an extended reality, XR, application. The listed items are exemplary only. The invention is not restricted to the listed types of distributed applications.

In an embodiment, the created session instance comprises a session server with an event service configured for forwarding events created by the session instance, the frontend and/or the real-time session application to the digital assistant module, the real-time session application and/or the backend, the digital assistant module, the real-time session application and the backend having subscribed to the event service, respectively. The event service is the central messaging hub of the digital assistant application and configured for receiving events from the components of the digital assistant application and transmitting received events to the components. Particularly, the event service implements a publish-subscribe function of the digital assistant application.

In another embodiment, the session server comprises the streaming service and/or the streaming service is configured for using webRTC. The digital assistant application is more compact when the streaming service is integrated in the session server. WebRTC which is a free and open source project.

A third aspect of the invention is a computer program product, comprising a digital storage medium storing a program code. The digital storage medium may comprise a hard disk, a digital versatile disk (DVD), a Universal Serial Bus (USB) stick, a random access memory (RAM) and the like and be provided locally or in a cloud connected to the internet, i.e. an internet cloud. The program code may be executed immediately from the storage medium or after an installation.

According to the invention, the program code causes computing devices to execute a digital assistant application carrying out a method according to an embodiment of the invention together with a distributed application when being executed by respective processors of the computing devices. The computer program product may be used for setting up the digital assistant application on the client device and a server device or a cloud remote from the client device and enabling the digital assistant application to carry out a method according to an embodiment of the invention in cooperation with the distributed application.

It is an essential advantage of the inventive method that the method is based on a traditional distributed application having a 2D GUI and still provides a user of the distributed application with a 3D character to optionally interact with. The former reduces a development effort while the latter allows for a flexible interaction with the distributed application, the flexibility resulting in a positive user experience.

It shall be understood that the features described previously and to be described subsequently may be used not only in the indicated combinations but also in different combinations or on their own without leaving the scope of the present invention.

The invention is described in detail by means of an exemplary embodiment and with reference to the drawings. Like components are indicated by like reference numerals throughout the drawings.
- Fig. 1: schematically shows an entity diagram of a digital assistant application according to an embodiment of the invention;
- Fig. 2: schematically shows a flow chart of an exemplary first use case of the digital assistant application shown in fig. 1;
- Fig. 3: schematically shows a flow chart of an exemplary second use case of the digital assistant application shown in fig. 1.

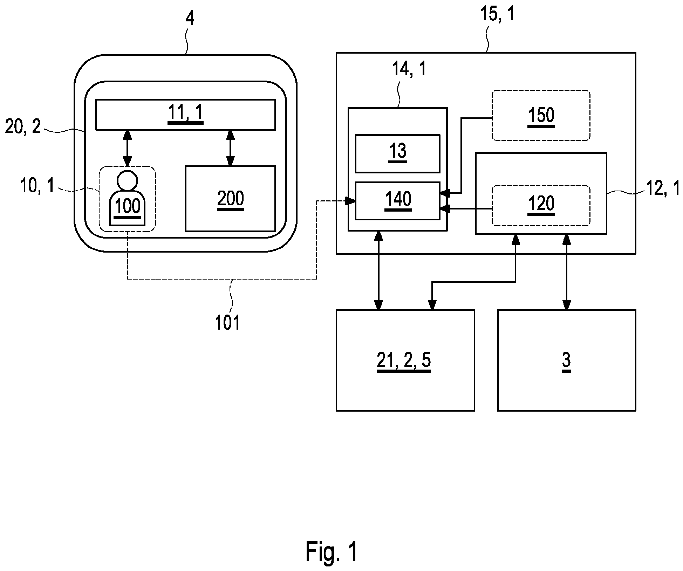

Fig. 1 schematically shows an entity diagram of a digital assistant application 1 according to an embodiment of the invention. The digital assistant application 1 comprises a digital assistant module 10 to be integrated in a frontend 20 of a distributed application 2. The distributed application 2 further comprises a backend 21 to be executed by a server device 5 as usual.

The distributed application 2 may be a web application, a native mobile application or an extended reality, XR, application to name only a few examples.

The digital assistant module 10 is configured for interacting with a frontend module 200 of the frontend 20 and providing the frontend 20 with a three-dimensional, 3D, character 100 having a human-like appearance to be displayed by a client device 4 executing the frontend 20. The digital assistant application 1 may comprise a coordinator module 11 configured for operationally linking the digital assistant module 10 to the frontend module 200.

The digital assistant application 1 further comprises a streaming service 13 configured for streaming the 3D character 100 to the digital assistant module 10. The streaming service 13 may be configured for using webRTC.

The digital assistant application 1 is configured for creating a session instance 15 to be executed by a virtual machine, VM, or a container remote from the client device 4. A real-time session application 12 of the created session instance 15 is configured for rendering the 3D character 100 and transmitting the rendered 3D character to the streaming service 13.

The created session instance 15 may further comprise a session server 14 with an event service 140 configured for forwarding events 150, 101, 120 created by the session instance 15, the frontend 20 and/or the real-time session application 12 to the digital assistant module 10, the real-time session application 12 and/or the backend 21 when the digital assistant module 10, the real-time session application 12 and the backend 21 have subscribed to the event service 140, respectively. The session server 14 may comprise the streaming service 13.

The real-time session application 12 may further be configured for interacting with the backend 21 of the distributed application 2 and/or be configured for interacting with a conversational artificial intelligence, Al, service 3 separate from the distributed application 2.

The digital assistant application 1 may be implemented by means of a computer program product comprising a digital storing medium storing a program code. The program code causes computing devices to execute the digital assistant application 1 carrying out a method according to the invention together with the distributed application 2 when being executed by respective processors of the computing devices.

The distributed application 2 is operated as follows using the digital assistant application 1. Exemplarily, a web application, a native mobile application or an extended reality, XR, application is executed as the distributed application 2.

The frontend 20 of the distributed application 2 and the backend 21 of the distributed application 2 are executed by the client device 4 and the server device 5, respectively.

The digital assistant module 10 which is integrated in the frontend 20 and provides a three-dimensional, 3D, character 100 having a human-like appearance to be displayed by the client device 4 interacts with the frontend module 200 of the frontend 20. Interacting with the frontend module 200 may comprise manipulating and/or detecting a manipulation of an element of a graphical user interface, GUI, provided by the frontend module 200.

The 3D character 100 is interacted with using a spoken natural language and/or the frontend module 200 is interacted with using a mouse click or a finger tap.

The real-time session application 12 of the session instance created by the digital assistant application 1 separate from the distributed application 2 and comprising the digital assistant module 10 renders the 3D character 100. The session instance 15 is executed by a virtual machine, VM, or a container remote from the client device 4. The real-time session application 12 may interact with a conversational artificial intelligence, Al, service 3 separate from the distributed application 2.

The streaming service 13 of the digital assistant application 1 streams the rendered 3D character 100 to the digital assistant module 10. The rendered 3D character 100 may be streamed using webRTC. The session instance 15 may execute the streaming service 13, the streaming service 13 being part of the session server 14.

The coordinator module 11 of the digital assistant application 1 may control the interaction of the digital assistant module 10 and the frontend module 200 and/or gather events created by frontend module 200.

The event service 140 of the session server 14 of the session instance 15 forwards events 150, 101, 120 created by the session instance 15, the frontend 20 and/or the real-time session application 12 to the digital assistant module 10, the real-time session application 12 and/or the backend 21, the digital assistant module 10, the real-time session application 12 and the backend 21 having subscribed to the event service, respectively.

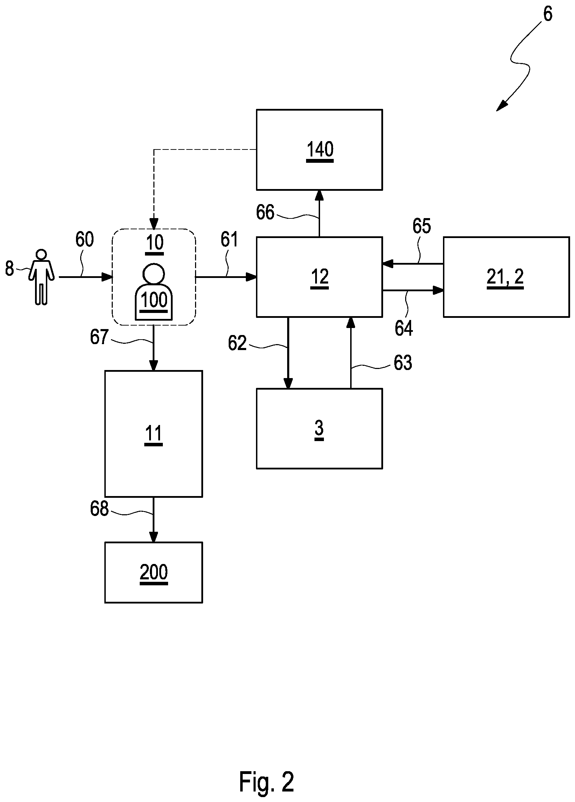

Fig. 2 schematically shows a flow chart of an exemplary use first case 6 of the digital assistant application 1 shown in fig. 1. A user 8 interacts 60 with the 3D character 100 provided by the digital assistant module 10 using a spoken natural language, e.g., requests a list of items by uttering 'I would like to see a list of items'. The digital assistant application 10 forwards 61 the utterance, i.e. the user request, to the real-time session application 12. The real-time session application 12 forwards 62 the utterance to the conversational AI service 3 which interprets the utterance identifying a corresponding intention of the user 8 and transmits 63 the identified intention to the real-time session application 12. The real-time session application 12 forwards 64 the transmitted intention to the backend 21. The backend 21 returns 65 the requested list of items to the real-time session application 12.

The real-time session application 12 creates a corresponding event and transmits 66 the created event to the event service 140. The event may comprise the intention, the requested list of items and an ID of the user 8. The event service 140 forwards the transmitted event to the digital assistant module 10. The digital assistant module 10 verifies the user 8 to be the recipient of the list of items and forwards 67 the forwarded event to the coordinator module 11. The coordinator module 11 causes 68 the frontend module 200 to display the list of items.

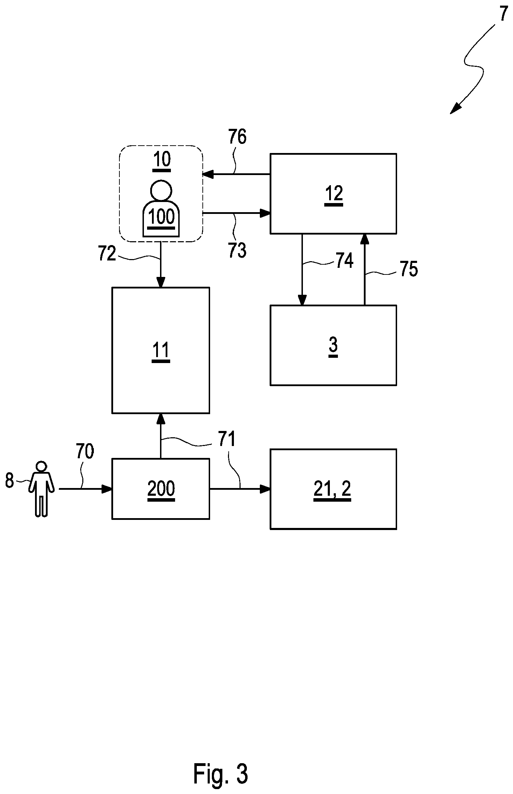

Fig. 3 schematically shows a flow chart of an exemplary second use case 7 of the digital assistant application 1 shown in fig. 1. The second use case 7 follows the first used case 6 and starts with the displayed list of items.

The user 8 selects 70 a list item from the displayed list items using a mouse click or a finger tap depending on the client device 4. The distributed application 2 reacts as usual, i.e., the frontend module 200 transmits 71 the selected list item to the backend 21. Additionally, the frontend module transmits 71 the selected list item to the coordinator module 11. The coordinator module 11 creates a corresponding selection event and transmits 72 the created selection event to the digital assistant module 10. The digital assistant module 10 forwards 73 the transmitted selection event to the real-time session application 12.

The real-time application 12 transmits 74 a reaction request to the conversational AI service 3. The conversational AI service 3 transmits 75 reaction data matching the reaction request to the real-time application 12. The reaction data comprises, e.g., facial expressions, gestures and utterances comprising spoken natural language. The real-time application 12 renders the 3D character 100 according to the transmitted reaction data and streams 76 the rendered 3D character 100 to the digital assistant module 10. The digital assistant module 10 causes the frontend 20 to display the streamed 3D character 100 uttering, e.g., 'Oh! I have seen you selected item 2. Good choice!'.

The invention is not restricted to the use cases 6, 7 shown in figs. 2 and 3, respectively. Rather may the modules resp. components of the digital assistant application 1 combined in different ways for supporting different distributed applications 2.

### Reference Numerals

- 1: digital assistant application
- 10: digital assistant module
- 100: 3D character
- 101: event
- 11: coordinator module
- 12: real-time session application
- 120: event
- 13: streaming service
- 14: session server
- 140: event service
- 15: session instance
- 150: event
- 2: distributed application
- 20: frontend
- 200: frontend module
- 21: backend
- 3: conversational artificial intelligence service
- 4: client device
- 5: server device
- 6: first use case
- 60: requesting a list of items
- 61: forwarding the user request
- 62: forwarding the user request
- 63: transmitting a user intention
- 64: forwarding the user intention
- 65: returning the requested list of items
- 66: transmitting an event
- 67: forwarding the event
- 68: causing the frontend module
- 7: second use case
- 70: selecting a list item
- 71: transmitting the selected list item
- 72: transmitting a selection event corresponding to the selected list item
- 73: transmitting the selection event
- 74: transmitting a reaction request
- 75: transmitting reaction data
- 76: streaming a 3D character
- 8: user

## Claims

1. A method for operating a distributed application (2), wherein
- a frontend (20) of a distributed application (2) and a backend (21) of the distributed application (2) are executed by a client device (4) and a server device (5), respectively;
- a digital assistant module (10) integrated in the frontend (20) and providing a three-dimensional, 3D, character (100) having a human-like appearance to be displayed by the client device (4) interacts with a frontend module (200) of the frontend (20);
- a real-time session application (12) of a session instance created by a digital assistant application (1) separate from the distributed application (2) and comprising the digital assistant module (10) renders the 3D character (100), the session instance being executed by a virtual machine, VM, or a container remote from the client device (4);
- a streaming service (13) of the digital assistant application (1) streams the rendered 3D character (100) to the digital assistant module (10).

2. The method according to claim 1, wherein a coordinator module (11) of the digital assistant application (1) controls the interaction of the digital assistant module (10) and the frontend module (200) and/or gathers events created by frontend module (200).

3. The method according to claim 1 or 2, wherein interacting with the frontend module (200) comprises manipulating and/or detecting a manipulation of an element of a graphical user interface, GUI, provided by the frontend module (200).

4. The method according to one of claims 1 to 3, wherein the rendered 3D character (100) is streamed using webRTC.

5. The method according to one of claims 1 to 4, wherein the 3D character (100) is interacted with using a spoken natural language and/or the frontend module (200) is interacted with using a mouse click or a finger tap.

6. The method according to one of claims 1 to 5, wherein an event service (140) of a session server (14) of the session instance (15) forwards events (150, 101, 120) created by the session instance (15), the frontend (20) and/or the real-time session application (12) to the digital assistant module (10), the real-time session application (12) and/or the backend (21), the digital assistant module (10), the real-time session application (12) and the backend (21) having subscribed to the event service, respectively.

7. The method according to one of claims 1 to 6, wherein the session instance (15) executes the streaming service (13), the streaming service (13) being part of the session server (14).

8. The method according to one of claims 1 to 7, wherein the real-time session application (12) interacts with a conversational artificial intelligence, Al, service (3) separate from the distributed application (2).

9. The method according to one of claims 1 to 8, wherein a web application, a native mobile application or an extended reality, XR, application is executed as the distributed application (2).

10. A digital assistant application (1) for a distributed application (2), comprising
- a digital assistant module (10) to be integrated in a frontend (20) of a distributed application (2), the digital assistant module (10) configured for interacting with a frontend module (200) of the frontend (20) and providing the frontend (20) with a three-dimensional, 3D, character (100) having a human-like appearance to be displayed by a client device (4) executing the frontend (20), and
- a streaming service (13) configured for streaming the 3D character (100) to the digital assistant module (10),
wherein the digital assistant application (1) is configured for creating a session instance (15) to be executed by a virtual machine, VM, or a container remote from the client device (4), and a real-time session application (12) of the created session instance (15) is configured for rendering the 3D character (100) and transmitting the rendered 3D character (100) to the streaming service (13).

11. The digital assistant application according to claim 10, wherein the digital assistant application (1) comprises a coordinator module (11) configured for operationally linking the digital assistant module (10) to the frontend module (200) and/or the real-time session application (12) is configured for interacting with a backend (21) of the distributed application (2) and/or is configured to interact with a conversational artificial intelligence, Al, service (3) separate from the distributed application (2).

12. The digital assistant application according to claim 10 or 11, wherein the distributed application (2) is a web application, a native mobile application or an extended reality, XR, application.

13. The digital assistant application according to one of claims 10 to 12, wherein the created session instance (15) comprises a session server (14) with an event service (140) configured for forwarding events (150, 101, 120) created by the session instance (15), the frontend (20) and/or the real-time session application (12) to the digital assistant module (10), the real-time session application (12) and/or the backend (21), the digital assistant module (10), the real-time session application (12) and the backend (21) having subscribed to the event service (140), respectively.

14. The digital assistant application according to claim 13, wherein the session server (14) comprises the streaming service (13) and/or the streaming service (13) is configured for using webRTC.

15. A computer program product, comprising a digital storage medium storing a program code, the program code causing computing devices to execute a digital assistant application (1) carrying out a method according to one of claims 1 to 9 together with a distributed application (2) when being executed by respective processors of the computing devices.
